(19) Europäisches Patentamt / European Patent Office / Office européen des brevets

(11) **EP 3 911 055 B1**

(12) **EUROPEAN PATENT SPECIFICATION**

(45) Date of publication and mention of the grant of the patent:
**12.06.2024 Bulletin 2024/24**

(21) Application number: **19908715.6**

(22) Date of filing: **10.01.2019**

(51) International Patent Classification (IPC):
**H04W 72/02** *(2009.01)*    **H04W 72/04** *(2023.01)*
**H04L 5/00** *(2006.01)*    **H04W 72/20** *(2023.01)*

(52) Cooperative Patent Classification (CPC):
**H04L 5/0053; H04L 5/0007; H04L 5/001; H04W 72/20**

(86) International application number:
**PCT/JP2019/000601**

(87) International publication number:
**WO 2020/144831 (16.07.2020 Gazette 2020/29)**

(54) **TERMINAL, RADIO COMMUNICATION METHOD AND SYSTEM**

ENDGERÄT, FUNKKOMMUNIKATIONSVERFAHREN UND SYSTEM

TERMINAL, PROCÉDÉ DE COMMUNICATION RADIO ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.11.2021 Bulletin 2021/46**

(73) Proprietor: **NTT DOCOMO, INC.**
**Chiyoda-Ku**
**Tokyo 100-6150 (JP)**

(72) Inventors:
• **TAKEDA, Kazuki**
  **Chiyoda-ku, Tokyo 100-6150 (JP)**
• **NAGATA, Satoshi**
  **Chiyoda-ku, Tokyo 100-6150 (JP)**
• **WANG, Lihui**
  **Beijing 100190 (CN)**

(74) Representative: **Hoffmann Eitle**
**Patent- und Rechtsanwälte PartmbB**
**Arabellastraße 30**
**81925 München (DE)**

(56) References cited:
• **3GPP DRAFT: "3rd Generation Partnership Project; Technical Specification Group Radio Access Network; NR; Physical layer procedures for control (Release 15)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.3.0, 1 October 2018 (2018-10-01), pages 1-101, XP051487512,**
• **CATT: "Remaining issues for NR PDCCH", 3GPP DRAFT; R1-1812603 REMAINING ISSUES FOR NR PDCCH-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 11 November 2018 (2018-11-11), XP051554551, Retrieved from the Internet: URL:http://www.3gpp.org/ftp/Meetings%5F3GP P%5FSYNC/RAN1/Docs/R1%2D1812603%2Ezip [retrieved on 2018-11-11]**

- QUALCOMM INCORPORATED: "Maintenance for physical downlink control channel", 3GPP DRAFT; R1-1813399 PDCCH MAINTENANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Washington, USA; 20181112 - 20181016 11 November 2018 (2018-11-11), XP051555437, Retrieved from the Internet: URL:http://www.3gpp.org/ftp/Meetings%5F3GPP%5FSYNC/RAN1/Docs/R1%2D1813399%2Ezip [retrieved on 2018-11-11]
- "Maintenance for physical downlink control channel", 3GPP TSG RAN WG1 Meeting #95 RI-1813399, 16 November 2018 (2018-11-16), XP051479720, Retrieved from the Internet: URL:http://www.3gpp.org/ftp/tsg_ran/WG1_RL1/TSGR1_95/Docs/RI-1813399.zip
- "Draft CR on 31.213 regarding number of BDs and CCEs for DL BWP", 3GPP TSG RAN WG1 Meeting #95 RI-1813301, 16 November 2018 (2018-11-16), XP051479607, Retrieved from the Internet: URL:http://www.3gpp.org/ftp/tsg_ran/WG1_RL1/TSGR1_95/Docs/RI-1813301.zip
- "Cross-carrier scheduling with different numerologies", 3GPP TSG RAN WG1 Ad-Hoc Meeting 1901 R1-1900984, 12 January 2019 (2019-01-12), XP051576518, Retrieved from the Internet: URL:http://www.3gpp.org/ftp/tsg_ran/WG1_RL1/TSGR1_AH/NR_AH_1901/Docs/RI-1900984.zip

**Description**

Technical Field

The present disclosure relates to a user terminal and a radio communication method in a next-generation mobile communication system.

Background Art

In a universal mobile telecommunications system (UMTS) network, Long Term Evolution (LTE) has been specified for the purpose of further high-speed data rate, low-delay, and the like (see Non-Patent Literature 1). LTE-Advanced (3GPP Rel. 10 to 14) has been specified for the purpose of further larger capacity and sophistication of LTE (third generation partnership project (3GPP) release (Rel.) 8, 9).

Successor systems to LTE (e.g., also referred to as 5th generation mobile communication system (5G), 5G+ (plus), new radio (NR), and 3GPP Rel. 15 or later) are considered.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Non Patent Literature 2: 3GPP DRAFT: "3rd Generation Partnership Project; Technical Specification Group Radio Access Network; NR; Physical layer procedures for control (Release 15)", 3GPP STANDARD; TECHNICAL SPECIFICATION; 3GPP TS 38.213, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, V15.3.0, 1 October 2018

Summary of Invention

Technical Problem

In NR, use of cross-carrier scheduling (CCS) is considered. In CCS, downlink control information (DCI) received in a certain carrier is used to schedule transmission or reception of another carrier.

In NR, in order to inhibit an increase in a processing load on UE, the maximum number of downlink control channel (physical downlink control channel (PDCCH)) candidates monitored per slot of one serving cell, the maximum number of non-overlapped control channel elements (CCEs), and the like are considered.

However, these numbers based on the current Rel. 15 NR specification are not suitable for CCS over different numerologies. Therefore, in order to use CCS over different numerologies, a more appropriate method of calculating the maximum number is required to be clearly specified. If the method is not clearly specified, the downlink control channel cannot be appropriately monitored, and communication throughput may be decreased.

One object of the present disclosure is to provide a user terminal and a radio communication method capable of appropriately monitoring a downlink control channel even when cross-carrier scheduling over different numerologies is introduced.

Solution to Problem

The subject-matter of the independent claims solves the above-described technical problem. The dependent claim 2 describes further preferred embodiments and the following description exemplifies best modes for carrying out the present invention.

Advantageous Effects of Invention

According to one aspect of the present disclosure, a downlink control channel can be appropriately monitored even when cross-carrier scheduling over different numerologies is introduced.

Brief Description of Drawings

Figs. 1A and 1B illustrate examples of the number of BDs at CA based on a conventional calculation method.
Figs. 2A and 2B illustrate examples of the number of BDs at CA based on a calculation method according to one embodiment of the present disclosure.
Figs. 3A and 3B illustrate other examples of the number of BDs at CA based on the calculation method according to one embodiment of the present disclosure.
Fig. 4 illustrates one example of a schematic configuration of a radio communication system according to one embodiment.
Fig. 5 illustrates one example of the configuration of a base station according to one embodiment.
Fig. 6 illustrates one example of the configuration of a user terminal according to one embodiment.
Fig. 7 illustrates one example of the hardware configuration of the base station and the user terminal according to one embodiment.

Description of Embodiments

In NR, use of cross-carrier scheduling (CCS) is considered. In CCS, downlink control information (DCI) received on a certain carrier is used to schedule transmission or reception of another carrier.

The application of CCS from a first carrier to a second carrier may be configured to UE by using higher layer signaling. For example, the relation between a carrier indication field (CIF) contained in DCI and the corresponding CCS (scheduled cell carrier) may be configured by using higher layer signaling.

In the present disclosure, the higher layer signaling may be any of, for example, radio resource control (RRC) signaling, medium access control (MAC) signaling, broadcast information, and the like, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), and other system information (OSI).

In NR, communication control by applying a plurality of numerologies is required. For example, in NR, it is assumed that transmission/reception is performed by using a plurality of pieces of subcarrier spacing (SCS) based on a frequency band and the like. SCS used in NR includes 15 kHz, 30 kHz, 60 kHz, 120 kHz, 240 kHz, and the like. Of course, applicable SCS is not limited thereto.

Note that the numerology (SCS) may be associated with a given index $\mu$. For example, $\mu = 0$ may indicate SCS = 15 kHz, $\mu = 1$ may indicate SCS = 30 kHz, $\mu = 2$ may indicate SCS = 60 kHz, and $\mu = 3$ may indicate SCS = 120 kHz. Note that these numbers are examples, and the values are not limited thereto.

In NR, in order to inhibit an increase in the processing load of UE, the maximum number of decodings (e.g., blind decoding (BD)) performed by the UE per slot of one serving cell is considered. The maximum number of BDs may be replaced with the maximum number of PDCCH candidates monitored by UE, the upper limit of the number of BDs, and the like.

For the same reason, the maximum number of non-overlapped control channel elements (CCEs) per slot in one serving cell is considered. The maximum number of CCEs may be replaced with the upper limit of the number of CCEs and the like.

The maximum number $M^{max,slot,\mu}_{PDCCH}$ of PDCCH candidates to monitor per slot of one serving cell may be $M^{max,slot,0}_{PDCCH} = 44$ (44 if SCS = 15 kHz), $M^{max,slot,1}_{PDCCH} = 36$ (36 if SCS = 30 kHz), $M^{max,slot,2}_{PDCCH} = 22$ (22 if SCS = 60 kHz), and $M^{max,slot,3}_{PDCCH} = 20$ (20 if SCS = 120kHz). Note that these numbers are examples, and the values are not limited thereto.

The maximum number $C^{max,slot,\mu}_{PDCCH}$ of non-overlapped CCE per slot of one serving cell may be $C^{max,slot,0}_{PDCCH}=56$ (56 if SCS = 15 kHz), $C^{max,slot,1}_{PDCCH}=56$ (56 if SCS = 30 kHz), $C^{max,slot,2}_{PDCCH}=48$ (48 if SCS = 60 kHz), and $C^{max,slot,3}_{PDCCH}=32$ (32 if SCS = 120kHz). Note that these numbers are examples, and the values are not limited thereto.

In a non-CA case, the upper limit of the number of BDs and the upper limit of the number of CCEs for a downlink bandwidth part (DL BWP) having an SCS configuration $\mu$ (e.g., $\mu = 0$ to 3) are the above-described $M^{max,slot,\mu}_{PDCCH}$ and $C^{max,slot,\mu}_{PDCCH}$.

UE may report capability information (higher layer parameter "pdcch-BlindDetectionCA") indicating that UE has capability of monitoring a PDCCH candidate for $N^{cap}_{cells}$ downlink cells to the base station. Here, $N^{cap}_{cells}$ may be an integer of 4 or more.

UE is configured with NDL, $N^{DL,\mu}_{cells}$ downlink cells including DL BWP with the SCS configuration $\mu$. When $\sum^{3}_{\mu=0}(N^{DL,\mu}_{cells}) \leq 4$ or $\sum^{3}_{\mu=0}(N^{DL,\mu}_{cells}) \leq N^{cap}_{cells}$ is established, the upper limit $M^{total,slot,\mu}_{PDCCH}$ of the number of BDs and the upper limit $C^{total,slot,\mu}_{PDCCH}$ of the number of CCEs for each scheduled cell is $M^{max,slot,\mu}_{PDCCH}$ and $C^{max,slot,\mu}_{PDCCH}$, respectively.

Note that $N^{DL,\mu}_{cells}$ may correspond to the number of configured downlink cells (which may be called component carrier (CC)) including DL BWP with the SCS configuration $\mu$.

UE is configured with $N^{DL,\mu}_{cells}$ downlink cells including DL BWP with the SCS configuration $\mu$ (e.g., $\mu = 0$ to 3). When $\Sigma^3_{\mu=0}(N^{DL,\mu}_{cells}) > N^{cap}_{cells}$ is established, it is unnecessary to monitor more than min ($M^{max,slot,\mu}_{PDCCH}$, $M^{total,slot,\mu}_{PDCCH}$) PDCCH candidates for each scheduled cell in active DL BWP having the SCS configuration $\mu$ of a scheduling cell.

That is, in the case, the upper limit of the number of BDs per scheduled cell may be min ($M^{max,slot,\mu}_{PDCCH}$, $M^{total,slot,\mu}_{PDCCH}$). The upper limit of the number of CCEs per scheduled cell may also be min ($C^{max,slot,\mu}_{PDCCH}$, $C^{total,slot,\mu}_{PDCCH}$).

[Math 1]

$$M^{total,slot,\mu}_{PDCCH} = \left\lfloor N^{cap}_{cells} \cdot M^{max,slot,\mu}_{PDCCH} \cdot N^{DL,\mu}_{cells} \Big/ \sum_{j=0}^{3} N^{DL,j}_{cells} \right\rfloor$$

Here, (Expression 1)

$$C^{total,slot,\mu}_{PDCCH} = \left\lfloor N^{cap}_{cells} \cdot C^{max,slot,\mu}_{PDCCH} \cdot N^{DL,\mu}_{cells} \Big/ \sum_{j=0}^{3} N^{DL,j}_{cells} \right\rfloor$$

(Expression 2)

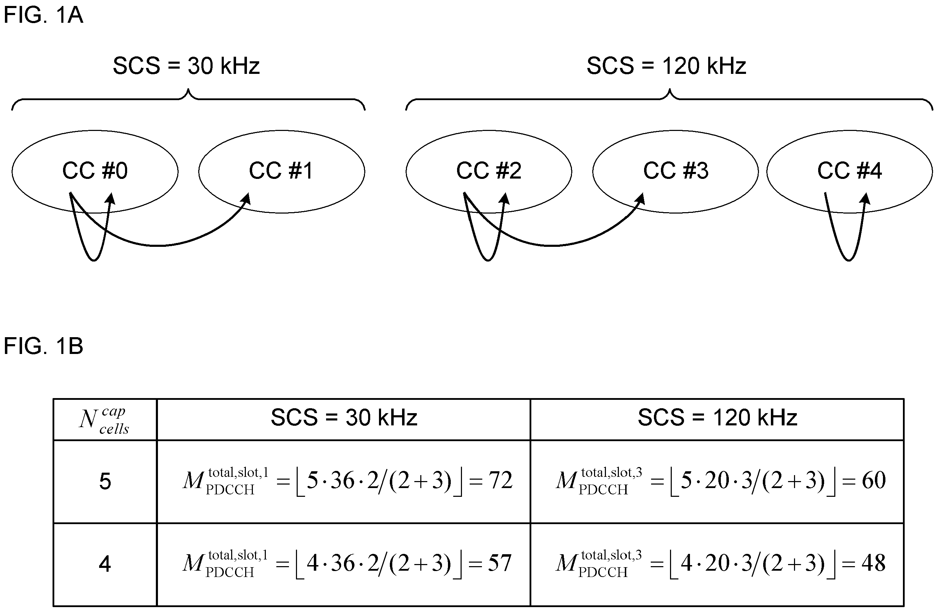

Figs. 1A and 1B illustrate examples of the number of BDs at CA based on a conventional calculation method. In the example, as illustrated in Fig. 1A, UE is configured with two DL cells (CC#0, #1) of SCS = 30 kHz ($\mu = 1$) and three DL cells (CC#2, #3, and #4) of SCS = 120 kHz ($\mu = 3$). That is, $N^{DL,1}_{cells} = 2$ and $N^{DL,3}_{cells} = 3$ are established.

Each of CC#0, #2, and #4 is subject to self-carrier (same carrier) scheduling. CC#1 is subject to CCS from CC#0. CC#3 is subject to CCS from CC#2.

Fig. 1B illustrates the difference in the number of BDs in accordance with $N^{cap}_{cells}$ of the UE. $M^{max,slot,\mu}_{PDCCH}$ in Expression 1 is assumed to have the above-described value. That is, $M^{max,slot,1}_{PDCCH} = 36$ and $M^{max,slot,3}_{PDCCH} = 20$ are established.

When $N^{cap}_{cells} = 5$ holds, $M^{total,slot,1}_{PDCCH} = 72$ and $M^{total,slot,3}_{PDCCH} = 60$ are established. When $N^{cap}_{cells} = 4$ holds, $M^{total,slot,1}_{PDCCH} = 57$ and $M^{total,slot,3}_{PDCCH} = 48$ are established.

Note that the upper limit of the number of CCEs can be described by reading the upper limit of the number of BDs also in the following example, so that duplicate description will not be repeated.

The description so far follows the specifications of the current Rel. 15 NR. In the above-described conventional method of calculating the upper limit of the number of BDs/CCEs, however, the number of BDs/CCEs for each numerology for a configured DL cell is determined. The method is thus not suitable for use in CCS over different numerologies. Therefore, in order to use CCS over different numerologies, a more appropriate upper limit of the number of BDs/CCEs is required to be clearly specified. If the upper limit is not clearly specified, PDCCH cannot be appropriately monitored, and communication throughput may be decreased.

The present inventors have conceived a method for determining an appropriate upper limit of the number of BDs/CCEs even when cross-carrier scheduling over different numerologies is introduced.

Hereinafter, embodiments according to the present disclosure will be described in detail with reference to the drawings. A radio communication method according to each of the embodiments may be applied independently, or may be applied in combination with others.

Noted that each embodiment may be applied even to the case where cross-carrier scheduling over different numerologies is not introduced (cross-carrier scheduling over the same numerology is used).

(Radio Communication Method)

In one embodiment, the definition of $N^{DL,\mu}_{cells}$ in a conventional calculation method is changed from the conventional "number of configured downlink cells (CC) including DL BWP with SCS configuration $\mu$" to "the number of configured DL-CCs whose scheduling cell is with DL BWPs having SCS configuration $\mu$" (in other words, number of DL cells (scheduled cells) scheduled by any DL cell (scheduling cell) with the SCS configuration $\mu$).

$M^{max,slot,\mu}_{PDCCH}$, $M^{total,slot,\mu}_{PDCCH}$, $C^{max,slot,\mu}_{PDCCH}$, and $C^{total,slot,\mu}_{PDCCH}$ are calculated by regarding $\mu$ as numerology (SCS configuration) of a scheduling cell. These expressions may be formally the same as the already described expressions. As a result, the upper limit of the number of BDs/CCEs can be determined for each numerology of scheduling cell.

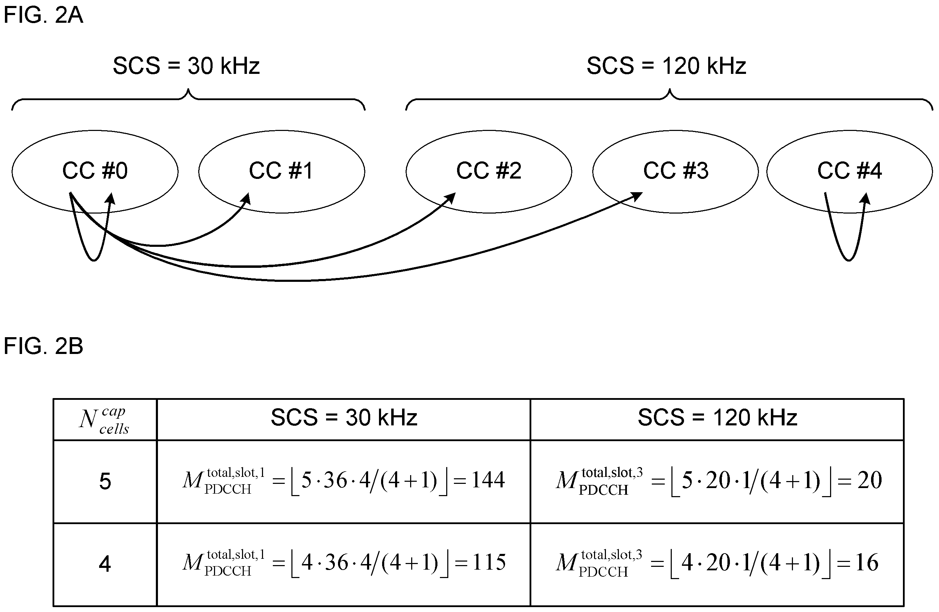

Figs. 2A and 2B illustrate examples of the number of BDs at CA based on a calculation method according to one embodiment of the present disclosure. In the example, as in Fig. 1A, UE is configured with two DL cells (CC#0, #1) of SCS = 30 kHz ($\mu = 1$) and three DL cells (CC#2, #3, and #4) of SCS = 120 kHz ($\mu = 3$).

In contrast, each of CC#0 and #4 is subject to self-carrier (same carrier) scheduling. Each of CC#1, #2 and #4 is subject to CCS from CC#0. That is, CC#2 and #3 are subject to cross-carrier scheduling over different numerologies.

When the upper limit of the number of BDs/CCEs is determined based on the conventional calculation method, the result is the same as that in Fig. 1B, but the result is not appropriate.

In contrast, according to the present embodiment, the four cells (CC#0, #1, #2, and #3) scheduled by CC#0 correspond to a first group of SCS = 30 kHz. One cell (CC#4) scheduled by CC#4 corresponds to a second group of SCS = 120 kHz.

That is, $M^{total,slot,1}_{PDCCH}$ is determined based on $N^{DL,1}_{cells} = 4$. $M^{total,slot,3}_{PDCCH}$ is determined based on $N^{DL,3}_{cells} = 1$.

As a result, when $N^{cap}_{cells} = 5$ holds, $M^{total,slot,1}_{PDCCH} = 144$ and $M^{total,slot,3}_{PDCCH} = 20$ are established. When $N^{cap}_{cells} = 4$ holds, $M^{total,slot,1}_{PDCCH} = 115$ and $M^{total,slot,3}_{PDCCH} = 16$ are established.

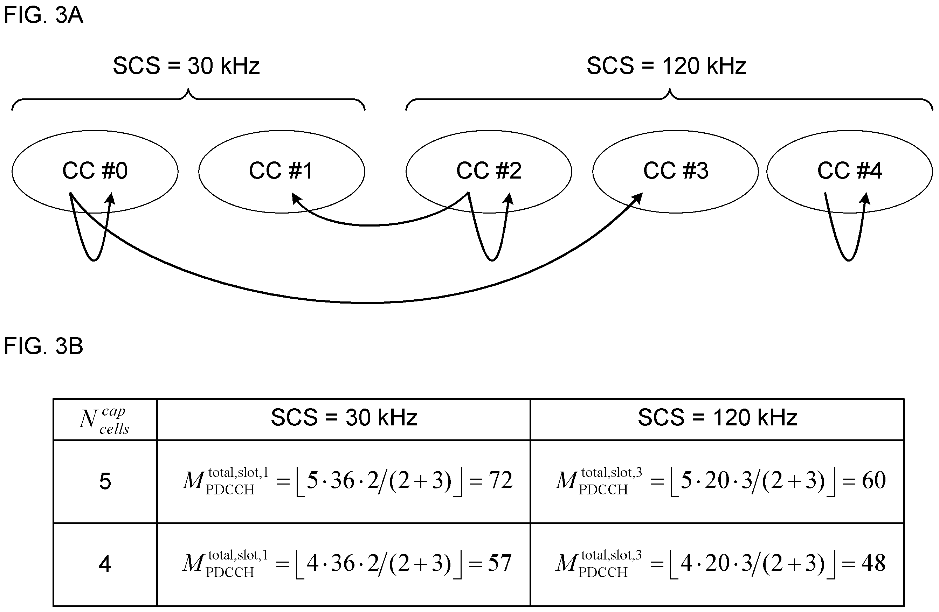

Figs. 3A and 3B illustrate other examples of the number of BDs at CA based on a calculation method according to one embodiment of the present disclosure. In the example, as in Fig. 1A, UE is configured with two DL cells (CC#0, #1) of SCS = 30 kHz ($\mu = 1$) and three DL cells (CC#2, #3, and #4) of SCS = 120 kHz ($\mu = 3$).

Each of CC#0, #2, and #4 is subject to self-carrier (same carrier) scheduling. CC#1 is subject to CCS from CC#2. CC#3 is subject to CCS from CC#0. That is, CC#1 and #3 are subject to cross-carrier scheduling over different numerologies.

According to the present embodiment, the two cells (CC#0 and #3) scheduled by CC#0 correspond to a first group of SCS = 30 kHz. Three cells (CC#1, #2, and #4) scheduled by CC#2 or #4 correspond to a second group of SCS = 120 kHz.

That is, $M^{total,slot,1}_{PDCCH}$ is determined based on $N^{DL,1}_{cells} = 2$. $M^{total,slot,3}_{PDCCH}$ is determined based on $N^{DL,3}_{cells} = 3$.

As a result, when $N^{cap}_{cells} = 5$ holds, $M^{total,slot,1}_{PDCCH} = 72$ and $M^{total,slot,3}_{PDCCH} = 60$ are established. When $N^{cap}_{cells} = 4$ holds, $M^{total,slot,1}_{PDCCH} = 57$ and $M^{total,slot,3}_{PDCCH} = 48$ are established.

According to the above-described one embodiment, as can be seen by comparing Figs. 2B and 3B, the upper limit of the number of BDs /CCEs can be appropriately calculated in accordance with the difference of the configuration of cross-carrier scheduling even when the SCS configurations configured for each cell are the same.

(Radio Communication System)

The configuration of a radio communication system according to one embodiment of the present disclosure will be described below. In the radio communication system, communication is performed by using one or a combination of the above-described radio communication methods according to the embodiments of the present disclosure.

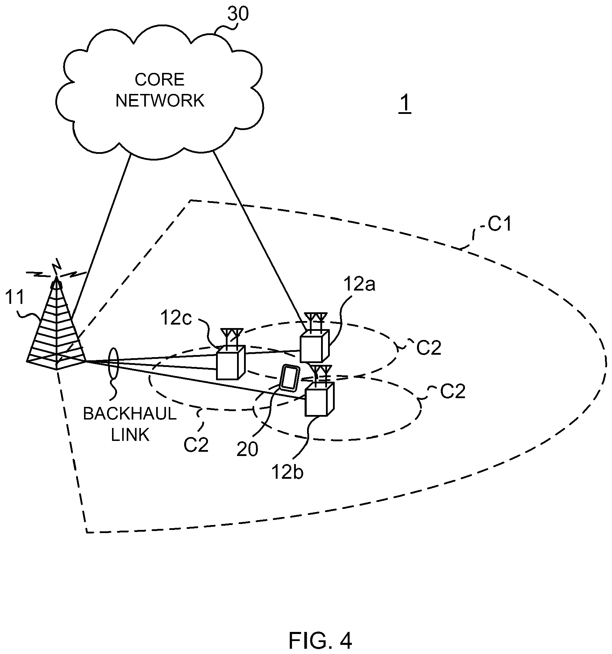

Fig. 4 illustrates one example of a schematic configuration of a radio communication system according to one embodiment. A radio communication system 1 may implement communication by using Long Term Evolution (LTE), specified by a third generation partnership project (3GPP), 5th generation mobile communication system new radio (5G NR), and the like.

The radio communication system 1 may support dual connectivity (multi-RAT dual connectivity (MR-DC)) between a plurality of pieces radio access technology (RAT). MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In EN-DC, an LTE (E-UTRA) base station (eNB) is a master node (MN), and an NR base station (gNB) is a secondary node (SN). In NE-DC, the NR base station (gNB) is MN, and an LTE (E-UTRA) base station (eNB) is SN.

The radio communication system 1 may support dual connectivity between a plurality of base stations in the same RAT (e.g., dual connectivity in which both MN and SN are NR base stations (gNB) (NR-NR dual connectivity (NN-DC)).

The radio communication system 1 may include a base station 11 and base stations 12 (12a to 12c). The base station 11 forms a macro cell C1 with a relatively wide coverage. The base stations 12 (12a to 12c) are disposed in the macro cell C1, and form a small cell C2 narrower than the macro cell C1. A user terminal 20 may be positioned in at least one cell. The arrangement, number, and the like of each cell and the user terminal 20 are not limited to the aspect in the figure. The base stations 11 and 12 will be collectively referred to as base stations 10 unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC) .

Each CC may be included in at least one of a first frequency range (frequency range 1 (FR1)) and a second frequency range (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited thereto, and FR1 may correspond to a frequency band higher than FR2, for example.

The user terminal 20 may perform communication in each CC by using at least one of time division duplex (TDD) and frequency division duplex (FDD).

The plurality of base stations 10 may be connected by wire (e.g., optical fiber in compliance with common public radio interface (CPRI) or an X2 interface) or by radio (e.g., NR communication). For example, when NR communication is used as backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include at least one of, for example, an evolved packet core (EPC), a 5G core network (5GCN), and a next generation core (NGC).

The user terminal 20 may follow at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (e.g., another single carrier transmission method and another multi-carrier transmission method) may be used as UL and DL radio access methods.

In the radio communication system 1, a physical downlink shared channel (PDSCH) shared by each user terminal 20, a physical broadcast channel (PBCH), a physical downlink control channel (PDCCH), and the like may be used as downlink channels.

In the radio communication system 1, a physical uplink shared channel (PUSCH) shared by each user terminal 20, a physical uplink control channel (PUCCH), a physical random access channel (PRACH), and the like may be used as uplink channels.

User data, higher layer control information, a system information block (SIB) are transmitted by PDSCH. User data, higher layer control information, and the like may be transmitted by PUSCH. Master information block (MIB) may be transmitted by PBCH.

Lower layer control information may be transmitted by PDCCH. The lower layer control information may include, for example, downlink control information (DCI) including scheduling information of at least one of PDSCH and PUSCH.

Note that DCI that schedules PDSCH may be referred to as DL assignment, DL DCI, and the like, and DCI that schedules PUSCH may be referred to as UL grant, UL DCI, and the like. Note that PDSCH may be replaced with DL data, and PUSCH may be replaced with UL data.

A control resource set (CORESET) and search space may be used to detect PDCCH. CORESET corresponds to a resource for searching for DCI. The search space follows a search area of PDCCH candidates and a search method. One CORESET may be associated with one or a plurality of pieces of search space. UE may monitor CORESET associated with certain search space based on search space settings.

One piece of search space may correspond to a PDCCH candidate corresponding to one or a plurality of aggregation levels. One or a plurality of pieces of search space may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (e.g., hybrid automatic repeat request acknowledgement (HARQ-ACK), which may be referred to as ACK/NACK and the like), and scheduling request (SR) may be transmitted by PUCCH. A random access preamble for establishing connection with a cell may be transmitted by PRACH.

Note that, in the present disclosure, downlink, uplink, and the like may be expressed without "link". Various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be at least one of, for example, a primary synchronization signal (PSS) and a secondary synchronization signal (SSS). A signal block including SS (PSS and SSS) and PBCH (and DMRS for PBCH) may be referred to as an SS/PBCH block, an SS Block (SSB), and the like. Note that SS, SSB, and the like may also be referred to as a reference signal.

In the radio communication system 1, a sounding reference signal (SRS), a demodulation reference signal (DMRS), and the like may be transmitted as an uplink reference signal (UL-RS). Note that, DMRS may be referred to as a user terminal-specific reference signal (UE-specific Reference Signal).

(Base Station)

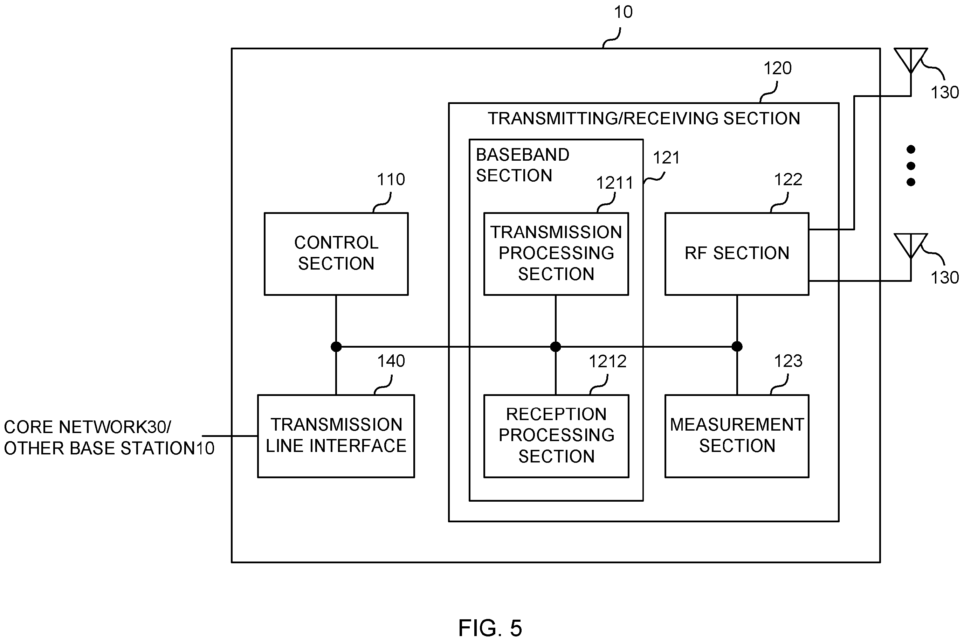

Fig. 5 illustrates one example of the configuration of a base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that the example mainly describes functional blocks of characteristic parts in the embodiment, and it may be assumed that the base station 10 also includes other functional blocks necessary for radio communication. A part of processing of each section described below may be omitted.

The control section 110 controls the entire base station 10. The control section 110 can be constituted by a controller, a control circuit, and the like, which are described based on common recognition in the technical field according to the present disclosure.

The control section 110 may control signal generation, scheduling (e.g., resource allocation and mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (e.g., setting and releasing) of a communication channel, management of the state of the base station 10, and management of radio resources.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 120 may be constituted as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described based on common recognition in the technical field according to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (e.g., precoding), analog beam forming (e.g., phase rotation), and the like.

The transmitting/receiving section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like on data, control information, and the like acquired from the control section 110 to generate a bit string to be transmitted.

The transmitting/receiving section 120 (transmission processing section 1211) may perform transmission processing such as channel encoding (which may include error correction encoding), modulation, mapping, filter processing, discrete Fourier transform (DFT) processing (if necessary), inverse fast Fourier transform (IFFT) processing, precoding, digital-analog conversion, and the like on a bit string to be transmitted, and output a baseband signal.

The transmitting/receiving section 120 (RF section 122) may perform modulation to a radio frequency band, filter processing, amplification, and the like on the baseband signal, and may transmit a signal in the radio frequency band via the transmission/reception antenna 130.

In contrast, the transmitting/receiving section 120 (RF section 122) may perform amplification, filter processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filter processing, demapping, demodulation, decoding (which may include error correction decoding), MAC layer processing, RLC layer processing, PDCP layer processing, and the like on the acquired baseband signal, and acquire user data and the like.

The transmitting/receiving section 120 (measurement section 123) may perform a measurement regarding a received signal. For example, the measurement section 123 may perform Radio Resource Management (RRM) measurement, Channel State Information (CSI) measurement, and the like based on the received signal. The measurement section 123 may measure received power (e.g., reference signal received power (RSRP)), received quality (e.g., reference signal received quality (RSRQ), signal to interference plus noise ratio (SINR), signal to noise ratio (SNR)), signal strength (e.g., received signal strength indicator (RSSI)), propagation line information (e.g., CSI), and the like. The measurement result may be output to the control section 110.

The transmission line interface 140 may transmit/receive (perform backhaul signaling on) a signal to and from an apparatus in the core network 30, other base stations 10, and the like, and may, for example, acquire and transmit user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

Note that the control section 110 may perform control of setting cross-carrier scheduling from (one or a plurality of) carriers corresponding to the first SCS to (one or a plurality of) carriers corresponding to the second SCS to the user terminal 20. In the case, the control section 110 may control PDCCH that performs transmission to the user terminal 20 in consideration of the maximum number of PDCCH candidates monitored for the first SCS and the maximum number of non-overlapped CCEs, which are determined based on the number of downlink cells scheduled by the carrier corresponding to the first SCS.

(User Terminal)

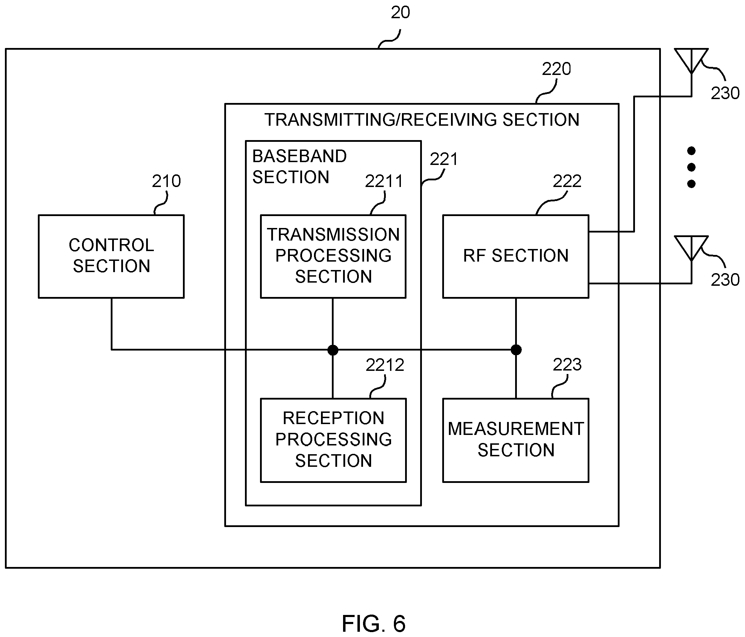

Fig. 6 illustrates one example of the configuration of a user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that the example mainly describes functional blocks of characteristic parts in the embodiment, and it may be assumed that the user terminal 20 also includes other functional blocks necessary for radio communication. A part of processing of each section described below may be omitted.

The control section 210 controls the entire user terminal 20. The control section 210 can include a controller, a control circuit, and the like, which are described based on common recognition in the technical field according to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like, which are described based on common recognition in the technical field according to the present disclosure.

The transmitting/receiving section 220 may be constituted as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (e.g., precoding), analog beam forming (e.g., phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like on, for example, data acquired from the control section 210, control information, and the like to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, and digital-analog conversion on a bit string to be transmitted, and may output a baseband signal.

Note that whether or not to apply DFT processing may be determined based on settings of transform precoding. When transform precoding is enabled for a channel (e.g., PUSCH), the transmitting/receiving section 220 (transmission processing section 2211) may perform DFT processing as the above-described transmission processing in order to transmit the channel by using a DFT-s-OFDM waveform. If not, the transmitting/receiving section 220 (transmission processing section 2211) is not required to perform DFT processing as the above-described transmission processing.

The transmitting/receiving section 220 (RF section 222) may perform modulation to a radio frequency band, filtering processing, amplification, and the like on a baseband signal, and may transmit the signal in the radio frequency band via the transmission/reception antenna 230.

In contrast, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may acquire user data and the like by applying reception processing such as analog-digital conversion, FFT processing, IDFT processing (if necessary), filter processing, demapping, demodulation, decoding (which may include error correction decoding), MAC layer processing, RLC layer processing, and PDCP layer processing on the acquired baseband signal.

The transmitting/receiving section 220 (measurement section 223) may perform a measurement regarding the received signal. For example, the measurement section 223 may perform RRM measurement, CSI measurement, and the like based on the received signal. The measurement section 223 may measure received power (e.g., RSRP), received quality (e.g., RSRQ, SINR, and SNR), signal strength (e.g., RSSI), propagation line information (e.g., CSI), and the like. The measurement result may be output to the control section 210.

Note that the transmission section and the receiving section of the user terminal 20 in the present disclosure may include at least one of the transmitting/receiving section 220 and the transmission/reception antenna 230.

Note that, when cross-carrier scheduling from (one or a plurality of) carriers corresponding to the first SCS to (one or a plurality of) carriers corresponding to the second SCS is configured, the control section 210 may determine the maximum number of PDCCH candidates monitored for the first SCS and the maximum number of non-overlapped CCEs based on the number of downlink cells scheduled by the carrier corresponding to the first SCS.

The transmitting/receiving section 220 may monitor (e.g., decode) PDCCH candidates in the carrier corresponding to the first SCS based on the maximum number of the PDCCH candidates and the maximum number of the non-overlapped CCEs.

In a calculation expression (e.g., expressions 1 and 2) for the maximum number of PDCCH candidates and the maximum number of non-overlapped CCEs, the control section 210 may assume $\mu$ to be SCS of a scheduling cell, and assume $N^{DL,\mu}_{cells}$ to be the number of downlink cells including DL BWP, in which a scheduling cell for the downlink cell has configurations of the first SCS, among configured downlink cells (which may be replaced with the number of downlink cells scheduled from a cell including DL BWP having the first SCS configurations or with the number of downlink cells scheduled from one or plurality of carriers corresponding to the first SCS).

(Hardware Configuration)

Note that the block diagrams that have been used to describe the above-described embodiments illustrate blocks in functional units. These functional blocks (configuration sections) may be implemented in any combination of at least one of hardware and software. A method of implementing each functional block is not particularly limited. That is, each functional block may be implemented by a physically or logically coupled single apparatus, or may be implemented by directly or indirectly connecting two or more physically or logically separate apparatuses (e.g., by wires, radio, and the like) and using the plurality of apparatuses. The functional blocks may be implemented by combining software with the one apparatus or the plurality of apparatuses.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration section) that causes transmission to function may be called a transmitting unit, a transmitter, and the like. In any case, as described above, the implementation method is not particularly limited.

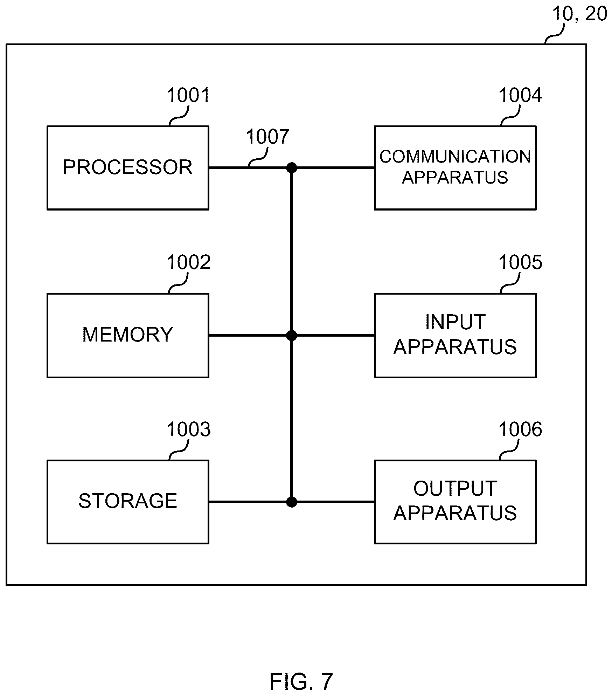

For example, a base station, a user terminal, and the like according to one embodiment of the present disclosure may function as a computer that executes the processing of the radio communication method of the present disclosure. Fig. 7 illustrates one example of the hardware configuration of a base station and a user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, the wording such as an apparatus, a circuit, a device, and a section, and a unit can be replaced with each other. The base station 10 and the user terminal 20 may have the hardware configuration with one or a plurality of apparatuses in the figure or without some apparatuses.

For example, although only one processor 1001 is illustrated, a plurality of processors may be provided. One processor may execute processing, and two or more processors may execute the processing simultaneously, sequentially, or by another method. Note that the processor 1001 may be implemented with one or more chips.

Each function of the base station 10 and the user terminal 20 is implemented by the processor 1001. For example, the processor 1001 performs operations by causing a given software (program) to be read on hardware such as a memory 1002 to control communication via a communication apparatus 1004 and control at least one of reading and writing of data in the memory 1002 and a storage 1003.

The processor 1001 controls the entire computer by, for example, running an operating system. The processor 1001 may include a central processing unit (CPU) including an interface with peripheral equipment, a control apparatus, an arithmetic apparatus, a register, and the like. For example, at least a part of the above-described control section 110 (210), transmitting/receiving section 120 (220), and the like may be implemented by the processor 1001.

The processor 1001 reads a program (program code), a software module, data, and the like from at least one of the storage 1003 and the communication apparatus 1004 into the memory 1002, and executes various pieces of processing in according therewith. A program to cause a computer to execute at least a part of the operation described in the above-described embodiment is used. For example, the control section 110 (210) may be implemented by a control program that is stored in the memory 1002 and operates in the processor 1001, and other functional blocks may be similarly implemented.

The memory 1002 is a computer-readable recording medium, and may include at least one of, for example, a read only memory (ROM), an erasable programmable rom (EPROM), an electrically EPROM (EEPROM), a random access memory (RAM), and other appropriate storage media. The memory 1002 may be referred to as a register, a cache, a main memory (main storage apparatus), and the like. The memory 1002 can store a program (program code), a software module, and the like, which can be executed for implementing the radio communication method according to one embodiment of the present disclosure.

The storage 1003 is a computer-readable recording medium, and may include at least one of, for example, a flexible disk, a floppy (registered trademark) disk, a magnetooptical disk (e.g., compact disc (compact disc ROM (CD-ROM) and the like), digital versatile disc, Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmitting/receiving device) for performing inter-computer communication via at least one of a wired network or a radio network, and is referred to as, for example, a network device, a network controller, a network card, and a communication module. The communication apparatus 1004 may include a high frequency switch, a duplexer, a filter, a frequency synthesizer, and the like in order to implement at least one of, for example, frequency division duplex (FDD) and time division duplex (TDD). For example, the above-described transmitting/receiving section 120 (220), transmission/reception antenna 130 (230), and the like may be implemented by the communication apparatus 1004. The transmitting/receiving section 120 (220) may be physically or logically implemented by a transmitting section 120a (220a) and a receiving section 120b (220b).

An input apparatus 1005 is an input device (e.g., keyboard, mouse, microphone, switch, button, and sensor) for receiving input from the outside. An output apparatus 1006 is an output device (e.g., display, speaker, and light emitting diode (LED) lamp) for performing output to the outside. Note that the input apparatus 1005 and the output apparatus 1006 may have integrated (e.g., touch panel).

Each apparatus such as the processor 1001 and the memory 1002 is connected by a bus 1007 for communicating information. The bus 1007 may include a single bus or different buses between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of each functional block may be implemented by the hardware. For example, the processor 1001 may be implemented with at least one of these pieces of hardware.

(Variations)

Note that terms described in the present disclosure and terms necessary for understanding the present disclosure may be replaced with other terms having the same or similar meaning. For example, a channel, a symbol, and a signal (or signaling) may be replaced with each other. The signal may be a message. A reference signal can be abbreviated as an "RS", and may be referred to as a "pilot", a "pilot signal", and the like depending on a standard to be applied. A component carrier (CC) may be referred to as a cell, a frequency carrier, a carrier frequency, and the like.

A radio frame may include one or a plurality of periods (frames) in a time domain. Each of one or a plurality of periods (frames) constituting a radio frame may be referred to as a subframe. The subframe may include one or a plurality of slots in the time domain. The subframe may be a fixed time length (e.g., 1 ms) that does not depend on numerology.

Here, the numerology may be a communication parameter applied to at least one of transmission and reception of a signal or a channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

The slot may include one or a plurality of symbols (e.g., orthogonal frequency division multiplexing (OFDM) symbol and single carrier frequency division multiple access (SC-FDMA) symbol) in the time domain. The slot may be a time unit based on numerology.

The slot may include a plurality of mini slots. Each mini slot may include one or a plurality of symbols in the time domain. The mini slot may be referred to as a subslot. Each mini slot may include symbols of the number fewer than that of a slot. PDSCH (or PUSCH) transmitted in a time unit larger than a mini slot may be referred to as PDSCH (PUSCH) mapping type A. PDSCH (or PUSCH) transmitted by using a mini slot may be referred to as PDSCH (PUSCH) mapping type B.

All of a radio frame, a subframe, a slot, a mini slot, and a symbol represent a time unit at the time of transmitting a signal. The radio frame, the subframe, the slot, the mini slot, and the symbol may be called by other applicable names. Note that a time unit such as the frame, the subframe, the slot, the mini slot, and the symbol in the present disclosure may be replaced with each other.

For example, one subframe may be referred to as TTI. A plurality of consecutive subframes may be referred to as TTI. One slot or one mini slot may be referred to as TTI. That is, at least one of the subframe and TTI may be a subframe (1 ms) in the existing LTE, a period shorter than 1 ms (e.g., 1 to 13 symbols), or a period longer than 1 ms. Note that a unit that represents TTI may be referred to as a slot, a mini slot, and the like, instead of the subframe.

Here, TTI refers to a minimum time unit of scheduling in radio communication, for example. For example, in LTE systems, the base station performs scheduling of allocating radio resources (e.g., frequency bandwidth and transmission power that can be used in each user terminal) to each user terminal in a TTI unit. Note that the definition of TTI is not limited thereto.

TTI may be a transmission time unit of a channel-encoded data packet (transport block), a code block, a codeword, and the like, or may be a processing unit of scheduling, link adaptation, and the like. Note that, when TTI is given, a time interval (e.g., number of symbols) in which the transport block, the code block, the codeword, and the like are actually mapped may be shorter than TTI.

Note that, when one slot or one mini slot is referred to as TTI, one or more TTIs (i.e., one or more slots or one or more mini slots) may be the minimum time unit of scheduling. The number of slots (number of mini slots) that constitutes the minimum time unit of the scheduling may be controlled.

TTI having a time length of 1 ms may be referred to as usual TTI (TTI in 3GPP Rel. 8 to 12), normal TTI, long TTI, a usual subframe, a normal subframe, a long subframe, a slot, and the like. TTI shorter than the usual TTI may be referred to as shortened TTI, short TTI, partial TTI (or fractional TTI), a shortened subframe, a short subframe, a mini slot, a subslot, a slot, and the like.

Note that the long TTI (e.g., usual TTI and subframe) may be replaced with TTI having a time length more than 1 ms, and the short TTI (e.g., shortened TTI) may be replaced with TTI having a TTI length less than the TTI length of the long TTI and not less than 1 ms.

A resource block (RB) is a resource allocation unit in the time domain and the frequency domain, and may include one or a plurality of consecutive subcarriers in the frequency domain. The number of subcarriers in RB may be the same regardless of numerology, and may be 12, for example. The number of subcarriers in RB may be determined based on numerology.

RB may include one or a plurality of symbols in the time domain, and may have a length of one slot, one mini slot, one subframe, or one TTI. Each of one TTI, one subframe, and the like each may include one or a plurality of resource blocks.

Note that one or a plurality of RBs may be referred to as a physical resource block (Physical RB (PRB)), a subcarrier group (SCG), a resource element group (REG), a PRB pair, an RB pair, and the like.

A resource block may include one or a plurality of resource elements (REs). For example, one RE may be a radio resource domain of one subcarrier and one symbol.

The bandwidth part (BWP) (which may be called partial bandwidth and the like) may represent a subset of consecutive common resource blocks (RB) for certain numerology in a certain carrier. Here, the common RB may be specified by an RB index with reference to a common reference point of the carrier. PRB may be defined by certain BWP, and numbered within the BWP.

BWP may include BWP for UL (UL BWP) and BWP for DL (DL BWP). In UE, one or a plurality of BWPs may be set in one carrier.

At least one of the set BWPs may be active, and UE is not required to assume transmission/reception of a given signal/channel outside the active BWP. Note that cell, carrier, and the like in the present disclosure may be replaced with BWP.

Note that the structures of the above-described radio frame, subframe, slot, mini slot, symbol, and the like are merely examples. For example, configurations of the number of subframes in a radio frame, the number of slots per subframe or radio frame, the number of mini slots in a slot, the number of symbols and RBs in a slot or a mini slot, the number of subcarriers in RB, the number of symbols in TTI, a symbol length, a cyclic prefix (CP) length, and the like can be variously changed.

The information, parameters, and the like described in the present disclosure may be represented in an absolute value, represented in a relative value from a given value, or represented by using other corresponding information. For example, radio resources may be specified by a given index.

Names used for parameters and the like in the present disclosure are in no respect limiting. A mathematical expression and the like using these parameters may differ from those explicitly disclosed in the present disclosure. Various channels (e.g., PUCCH and PDCCH) and information elements can be identified by any suitable name. Various names allocated to these various channels and information elements are in no respect limiting.

The information, signals, and the like described in the present disclosure may be represented by using any of various different pieces of technology. For example, data, instructions, commands, information, signals, bits, symbols, chips, and the like, which may be referenced throughout the above description, may be represented by voltages, currents, electromagnetic waves, magnetic fields, magnetic particles, optical fields, optical photons, or any combination thereof.

Information, signals, and the like can be output at least one of from higher layer to lower layer and from lower layer to higher layer. Information, signals, and the like may be input/output via a plurality of network nodes.

The input/output information, signals, and the like may be stored in a specific location (e.g., memory), or may be managed in a control table. The input/output information, signals, and the like can be overwritten, updated, or appended. The output information, signals, and the like may be deleted. The input information, signals, and the like may be transmitted to another apparatus.

Information is not required to be reported by a method of an aspect/embodiment described in the present disclosure, and may be reported by another method. For example, in the present disclosure, information may be reported by physical layer signaling (e.g., downlink control information (DCI) and uplink control information (UCI)), higher layer signaling (e.g., radio resource control (RRC) signaling, broadcast information (master information block (MIB), and system information block (SIB)), and medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. The RRC signaling may be referred to as an RRC message, and may be, for example, an RRC connection setup message, an RRC connection reconfiguration message, and the like. The MAC signaling may be reported by using, for example, a MAC control element (CE).

Predetermined information (e.g., "being X") may be reported not explicitly but implicitly (e.g., by not reporting the given information or by reporting other information).

Decision may be made in a value represented by one bit (0 or 1), in a Boolean value represented by true or false, or by comparing numerical values (e.g., comparison against given value).

Regardless of whether referred to as software, firmware, middleware, microcode, or hardware description language, or referred to by other names, software should be broadly interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, instruction, information, and the like may be transmitted/received via a transmission medium. For example, when software is transmitted from a website, a server, or other remote sources by using at least one of wired technology (coaxial cable, optical fiber cable, twisted-pair cable, digital subscriber line (DSL), and the like) or wireless technology (infrared light, microwave, and the like), at least one of these wired technology and wireless technology is included in the definition of the transmission medium.

The terms "system" and "network" used in the present disclosure may be compatibly used. The "network" may mean an apparatus (e.g., base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", "component carrier", and the like may be compatibly used. The base station may be referred to by a term such as a macro cell, a small cell, a femto cell, a pico cell, and the like.

A base station can accommodate one or a plurality of (e.g., three) cells. When a base station accommodates a plurality of cells, the entire coverage area of the base station can be partitioned into a plurality of smaller areas. Each smaller area can provide communication service through a base station subsystem (e.g., indoor small base station (remote radio head (RRH))). The term "cell" or "sector" refers to a part or all of the coverage area of at least one of a base station and a base station subsystem which provide communication service in the coverage.

In the present disclosure, the terms such as a "mobile station (MS)", a "user terminal", "user equipment (UE)", and a "terminal" can be compatibly used.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

At least one of the base station or the mobile station may be referred to as a transmitting apparatus, a receiving apparatus, a radio communication apparatus, and the like. Note that at least one of the base station and mobile station may be a device mounted on a moving object, a moving object itself, and the like. The moving object may be a vehicle (e.g., car and airplane), an unmanned moving object (e.g., drone and autonomous car), or a (manned or unmanned) robot. Note that at least one of the base station and the mobile station includes an apparatus that does not necessarily move during a communication operation. For example, at least one of the base station and the mobile station may be Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication between a plurality of user terminals (which may be referred to as, for example, device-to-device (D2D) and vehicle-to-everything (V2X)). In the case, the user terminal 20 may have a function of the above-described base stations 10. The wording such as "up" and "down" may be replaced with the wording corresponding to the communication between terminals (e.g., "side"). For example, an uplink channel and a downlink channel may be replaced with a side channel.

Similarly, the user terminal in the present disclosure may be replaced with a base station. In the case, the base stations 10 may have a function of the above-described user terminal 20.

In the present disclosure, an operation performed by a base station may be performed by an upper node thereof in some cases. In a network including one or a plurality of network nodes with a base station, it is clear that various operations performed so as to communicate with a terminal can be performed by a base station, one or a plurality of network nodes (e.g., mobility management entity (MME) and serving-gateway (S-GW) may be possible, but are not limiting) other than the base station, or a combination thereof.

The aspects/embodiments illustrated in the present disclosure may be used independently or in combination, and may be switched along with execution. The processing procedure, sequence, flowchart, and the like of each aspect/embodiment illustrated in the present disclosure may be re-ordered as long as inconsistencies do not arise. For example, in the methods described in the present disclosure, various step elements are presented by using an illustrative order, and the methods are not limited to the presented specific order.

Each aspect/embodiment illustrated in the present disclosure may be applied to a system using Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new-radio access technology (New-RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), and other appropriate radio communication methods, a next generation system expanded based thereon, and the like. A plurality of systems may be combined (e.g., combination of LTE or LTE-A and 5G) and applied.

The phrase "based on" used in the present disclosure does not mean "based only on", unless otherwise specified. In other words, the phrase "based on" means both "based only on" and "based at least on".

Reference to any element using designations such as "first", "second", and the like used in the present disclosure does not generally limit the quantity or order of these elements. These designations may be used in the present disclosure only for convenience, as a method for distinguishing two or more elements. Reference to the first and second elements does not mean that only two elements may be adopted, or that the first element must precede the second element in some way.

The terms "judging (determining)" used in the present disclosure may encompass a wide variety of operations. For example, "judging (determining)" may be regarded as "judging (determining)" judging, calculating, computing, processing, deriving, investigating, looking up, search, inquiry (e.g., looking up in table, database, or another data structure), ascertaining, and the like.

"Judging (determining)" may be regarded as "judging (determining)" receiving (e.g., receiving information), transmitting (e.g., transmitting information), input, output, accessing (e.g., accessing data in memory), and the like.

"Judging (determining)" may be regarded as "judging (determining)" resolving, selecting, choosing, establishing, comparing, and the like. That is, "judging (determining)" may be regarded as "judging (determining)" some operations.

"Judging (determining)" may be replaced with "assuming", "expecting", "considering", and the like.

The terms "connected" and "coupled", or any variation thereof used in the present disclosure mean all direct or indirect connections or coupling between two or more elements, and can include the presence of one or more intermediate elements between two elements that are "connected" or "coupled" to each other. The coupling or connection between the elements may be physical, logical, or a combination thereof. For example, "connection" may be replaced with "access".

In the present disclosure, when two elements are connected, these elements may be considered to be "connected" or "coupled" to each other by using one or more electrical wires, cables, printed electrical connections, and the like, and by using, as some non-limiting and non-inclusive examples, electromagnetic energy having a wavelength in the radio frequency domain, microwave domain, and optical (both visible and invisible) domain, and the like.

In the present disclosure, the phrase "A and B are different" may mean "A and B are different from each other". Note that the phrase may mean that "Each of A and B is different from C". The terms such as "leave", "coupled", and the like may be interpreted similarly to "different".

When "include", "including", and variations thereof are used in the present disclosure, these terms are intended to be inclusive similarly to the term "comprising". The term "or" used in the present disclosure is intended not to be exclusive-OR.

In the present disclosure, when English articles such as "a", "an", and "the" are added in translation, the present disclosure may include the plural forms of nouns that follow these articles.

**Claims**

1. A terminal (20) comprising:

    a receiving section (220) that is configured to monitor physical downlink control channel, PDCCH, candidates on a first carrier (CC #0) corresponding to a first subcarrier spacing, SCS, based on a maximum number of the PDCCH candidates and a maximum number of non-overlapping control channel elements, CCEs;
    **characterized by**
    a control section (210) that, when a cross carrier scheduling from the first carrier (CC #0) corresponding to the first SCS to a second carrier (CC #2, CC #3) corresponding to a second SCS different from the first SCS is configured, is configured to determine, based on a number of downlink cells scheduled by the first carrier (CC #0) corresponding to the first SCS, the maximum number of monitored PDCCH candidates and the maximum number of monitored non-overlapping CCEs for the first SCS,
    wherein the downlink cells scheduled by the first carrier includes a downlink cell that is cross-carrier scheduled to the second carrier corresponding to the second SCS.

2. The terminal (20) according to claim 1, wherein the control section (210) is configured to determine the maximum number of the PDCCH candidates $M^{\mathrm{total,slot,\mu}}_{\mathrm{PDCCH}}$ and the maximum number of the non-overlapping CCEs $C^{\mathrm{total,slot,\mu}}_{\mathrm{PDCCH}}$ according to

formula 1:

$$M^{\mathrm{total,slot,\mu}}_{\mathrm{PDCCH}} = \left| N^{\mathrm{cap}}_{\mathrm{cells}} \cdot M^{\mathrm{max,slot,\mu}}_{\mathrm{PDCCH}} \cdot N^{\mathrm{DL,\mu}}_{\mathrm{cells}} \middle/ \sum_{j=0}^{3} N^{\mathrm{DL,}j}_{\mathrm{cells}} \right|$$

and

formula 2:

$$C_{PDCCH}^{total,slot,\mu} = \left| N_{cells}^{cap} \cdot C_{PDCCH}^{max,slot,\mu} \cdot N_{cells}^{DL,\mu} \middle/ \sum_{j=0}^{3} N_{cells}^{DL,j} \right|$$

respectively,

wherein $\mu$ is an index indicating a SCS of a scheduling cell,
$N_{cells}^{DL,\mu}$ is a number of downlink cells scheduled by the first carrier corresponding to the first SCS among the configured downlink cells,
$N_{cells}^{cap}$ is a number of downlink cells to monitor PDCCH candidate,
$M_{PDCCH}^{max,slot,\mu}$ is a maximum number of PDCCH candidates to monitor per slot of one serving cell, and
$C_{PDCCH}^{max,slot,\mu}$ is a maximum number of non-overlapping CCEs per slot of one serving cell.

**3.** A radio communication method comprising:

monitoring physical downlink control channel, PDCCH, candidates on a first carrier (CC #0) corresponding to a first subcarrier spacing, SCS, based on a maximum number of the PDCCH candidates and a maximum number of non-overlapping control channel elements, CCEs;
**characterized by**
when a cross carrier scheduling from the first carrier (CC #0) corresponding to the first SCS to a second carrier (CC #2, CC #3) corresponding to a second SCS different from the first SCS is configured, determining, based on a number of downlink cells scheduled by the first carrier (CC #0) corresponding to the first SCS, the maximum number of monitored PDCCH candidates and the maximum number of monitored non-overlapping CCEs for the first SCS,
wherein the downlink cells scheduled by the first carrier includes a downlink cell that is cross-carrier scheduled to the second carrier corresponding to the second SCS.

**4.** A system comprising a terminal (20) according to claim 1 or 2 and a base station (10), wherein the base station (10) comprises:
a transmitting section (120) that is configured to transmit the PDCCH candidates.

**Patentansprüche**

**1.** Endgerät (20), umfassend:

einen Empfangsabschnitt (220), der konfiguriert ist, um physikalische Downlink-Steuerkanal-, PDCCH-, Kandidaten auf einem ersten Träger (CC #0), der einem ersten Subcarrier Spacing, SCS, entspricht, auf der Grundlage einer maximalen Anzahl der PDCCH-Kandidaten und einer maximalen Anzahl von nicht überlappenden Control Channel Elements, CCEs, zu überwachen;
**gekennzeichnet durch**
einen Steuerabschnitt (210), der, wenn eine trägerübergreifende Planung von dem ersten Träger (CC #0), der dem ersten SCS entspricht, zu einem zweiten Träger (CC #2, CC #3), der einem zweiten SCS entspricht, der sich von dem ersten SCS unterscheidet, erfolgt, konfiguriert ist, um auf der Grundlage einer Anzahl von Downlink-Zellen, die vom ersten Träger (CC #0) entsprechend des ersten SCS geplant sind, die maximale Anzahl von überwachten PDCCH-Kandidaten und die maximale Anzahl von überwachten nicht überlappenden CCEs für den ersten SCS zu bestimmen,
wobei die vom ersten Träger geplanten Downlink-Zellen eine Downlink-Zelle einschließt, die trägerübergreifend für den zweiten Träger geplant ist, der dem zweiten SCS entspricht.

**2.** Endgerät (20) nach Anspruch 1, wobei der Steuerabschnitt (210) konfiguriert ist, um die maximale Anzahl der PDCCH-Kandidaten M$^{\text{total,slot},\mu}_{\text{PDCCH}}$, und die maximale Anzahl der nicht überlappenden CCEs C$^{\text{total,slot},\mu}_{\text{PDCCH}}$ nach der Formel 1 zu bestimmen:

$$M^{\text{total,slot},\mu}_{\text{PDCCH}} = \left| N^{\text{cap}}_{\text{Zellen}} \cdot M^{\text{max,slot},\mu}_{\text{PDCCH}} \cdot N^{\text{DL},\mu}_{\text{Zellen}} \middle/ \sum_{j=0}^{3} N^{\text{DL},j}_{\text{Zellen}} \right|$$

und Formel 2:

$$C^{total,slot,\mu}_{PDCCH} = \left| N^{cap}_{Zellen} \cdot C^{max,slot,\mu}_{PDCCH} \cdot N^{DL,\mu}_{Zellen} \middle/ \sum_{j=0}^{3} N^{DL,j}_{Zellen} \right|$$

jeweils,

wobei $\mu$ ein Index ist, der ein SCS einer Planungszelle angibt,
$N^{\text{DL},\mu}_{\text{Zellen}}$ eine Anzahl von Downlink-Zellen ist, die von dem ersten Träger entsprechend des ersten SCS unter den konfigurierten Downlink-Zellen eingeplant sind,
$N^{\text{cap}}_{\text{Zellen}}$ eine Anzahl von Downlink-Zellen zur Überwachung des PDCCH-Kandidaten ist,
$M^{\text{max,slot},\mu}_{\text{PDCCH}}$ die maximale Anzahl der zu überwachenden PDCCH-Kandidaten pro Slot einer Serving Cell und
$C^{\text{max,slot},\mu}_{\text{PDCCH}}$ eine maximale Anzahl von sich nicht überschneidenden CCEs pro Slot einer Serving Cell ist.

**3.** Funkkommunikationsverfahren, umfassend:

Überwachen von physikalischen Downlink-Steuerkanal-, PDCCH-, Kandidaten auf einem ersten Träger (CC #0), der einem ersten Subcarrier Spacing, SCS, entspricht, auf der Grundlage einer maximalen Anzahl der PDCCH-Kandidaten und einer maximalen Anzahl von nicht überlappenden Steuerkanalelementen, Control Channel Elements, CCEs, zu überwachen;
**gekennzeichnet durch**
wenn eine trägerübergreifende Planung von dem ersten Träger (CC #0), der dem ersten SCS entspricht, zu einem zweiten Träger (CC #2, CC #3), der einem zweiten SCS entspricht, die sich von dem ersten SCS unterscheidet, konfiguriert ist, Bestimmen, basierend auf einer Anzahl von Downlink-Zellen, die von dem ersten Träger (CC #0), der dem ersten SCS entspricht, geplant werden, der maximalen Anzahl von überwachten PDCCH-Kandidaten und der maximalen Anzahl von überwachten nicht überlappenden CCEs für den ersten SCS,
wobei die vom ersten Träger geplanten Downlink-Zellen eine Downlink-Zelle einschließt, die trägerübergreifend für den zweiten Träger geplant ist, der dem zweiten SCS entspricht.

**4.** System umfassend eine Endgerät (20) nach Anspruch 1 oder 2 und eine Basisstation (10), wobei die Basisstation (10) umfasst:
einen Sendeabschnitt (120), der zum Senden der PDCCH-Kandidaten konfiguriert ist.

**Revendications**

**1.** Terminal (20) comprenant :

une section de réception (220) qui est configurée pour surveiller des candidats de canal physique de commande de liaison descendante, PDCCH, sur une première porteuse (CC #0) correspondant à un premier espacement de sous-porteuses, SCS, sur la base d'un nombre maximal des candidats de PDCCH et d'un nombre maximal d'éléments de canal de commande, CCE, sans chevauchement ;
**caractérisé par**

une section de commande (210) qui, lorsqu'une planification inter-porteuse de la première porteuse (CC #0) correspondant au premier SCS à une seconde porteuse (CC #2, CC #3) correspondant à un second SCS différent du premier SCS est configurée, est configurée pour déterminer, sur la base d'un nombre de cellules de liaison descendante planifiées par la première porteuse (CC #0) correspondant au premier SCS, le nombre maximal de candidats de PDCCH surveillés et le nombre maximal de CCE sans chevauchement surveillés pour le premier SCS,

dans lequel les cellules de liaison descendante planifiées par la première porteuse incluent une cellule de liaison descendante qui est planifiée inter-porteuse pour la seconde porteuse correspondant au second SCS.

2. Terminal (20) selon la revendication 1, dans lequel la section de commande (210) est configurée pour déterminer le nombre maximal des candidats de PDCCH $M^{total,créneau,\mu}_{PDCCH}$ et le nombre maximal de CCE sans chevauchement $C^{total,créneau,\mu}_{PDCCH}$ selon la formule 1 :

$$M^{total,créneau,\mu}_{PDCCH} = \left| N^{cap}_{cellules} \cdot M^{max,créneau,\mu}_{PDCCH} \cdot N^{DL,\mu}_{cellules} \middle/ \sum_{j=0}^{3} N^{DL,j}_{cellules} \right|$$

et la formule 2 :

$$C^{total,créneau,\mu}_{PDCCH} = \left| N^{cap}_{cellules} \cdot C^{max,créneau,\mu}_{PDCCH} \cdot N^{DL,\mu}_{cellules} \middle/ \sum_{j=0}^{3} N^{DL,j}_{cellules} \right|$$

respectivement,

dans lequel $\mu$ est un indice indiquant un SCS d'une cellule de planification,
$N^{DL,\mu}_{cellules}$ est un nombre de cellules de liaison descendante planifiées par la première porteuse correspondant au premier SCS parmi les cellules de liaison descendante configurées,
$N^{cap}_{cellules}$ est un nombre de cellules de liaison descendante pour surveiller un candidat de PDCCH,
$M^{max,créneau,\mu}_{PDCCH}$ est un nombre maximal de candidats de PDCCH à surveiller par créneau d'une cellule de desserte, et
$C^{max,créneau,\mu}_{PDCCH}$ est un nombre maximal de CCE sans chevauchement par créneau d'une cellule de desserte.

3. Procédé de communication radio comprenant :

la surveillance de candidats de canal physique de commande de liaison descendante, PDCCH, sur une première porteuse (CC #0) correspondant à un premier espacement de sous-porteuse, SCS, sur la base d'un nombre maximal des candidats de PDCCH et d'un nombre maximal d'éléments de canal de commande, CCE, sans chevauchement ;
**caractérisé par**
lorsqu'une planification inter-porteuse de la première porteuse (CC #0) correspondant au premier SCS à une seconde porteuse (CC #2, CC #3) correspondant à un second SCS différent du premier SCS est configurée, la détermination, sur la base d'un nombre de cellules de liaison descendante planifiées par la première porteuse (CC #0) correspondant au premier SCS, du nombre maximal de candidats de PDCCH surveillés et du nombre maximal de CCE sans chevauchement surveillés pour le premier SCS,
dans lequel les cellules de liaison descendante planifiées par la première porteuse incluent une cellule de liaison descendante qui est planifiée inter-porteuse pour la seconde porteuse correspondant au second SCS.

4. Système comprenant un terminal (20) selon la revendication 1 ou la revendication 2 et une station de base (10), dans lequel la station de base (10) comprend :
une section de transmission (120) qui est configurée pour transmettre les candidats de PDCCH.

FIG. 1A

SCS = 30 kHz

SCS = 120 kHz

FIG. 1B

| $N_{cells}^{cap}$ | SCS = 30 kHz | SCS = 120 kHz |
|---|---|---|
| 5 | $M_{PDCCH}^{total,slot,1} = \left\lfloor 5 \cdot 36 \cdot 2/(2+3) \right\rfloor = 72$ | $M_{PDCCH}^{total,slot,3} = \left\lfloor 5 \cdot 20 \cdot 3/(2+3) \right\rfloor = 60$ |
| 4 | $M_{PDCCH}^{total,slot,1} = \left\lfloor 4 \cdot 36 \cdot 2/(2+3) \right\rfloor = 57$ | $M_{PDCCH}^{total,slot,3} = \left\lfloor 4 \cdot 20 \cdot 3/(2+3) \right\rfloor = 48$ |

FIG. 2A

SCS = 30 kHz

SCS = 120 kHz

CC #0    CC #1    CC #2    CC #3    CC #4

EP 3 911 055 B1

FIG. 2B

| $N_{cells}^{cap}$ | SCS = 30 kHz | SCS = 120 kHz |
|---|---|---|
| 5 | $M_{\mathrm{PDCCH}}^{\mathrm{total,slot,1}} = \lfloor 5 \cdot 36 \cdot 4/(4+1) \rfloor = 144$ | $M_{\mathrm{PDCCH}}^{\mathrm{total,slot,3}} = \lfloor 5 \cdot 20 \cdot 1/(4+1) \rfloor = 20$ |
| 4 | $M_{\mathrm{PDCCH}}^{\mathrm{total,slot,1}} = \lfloor 4 \cdot 36 \cdot 4/(4+1) \rfloor = 115$ | $M_{\mathrm{PDCCH}}^{\mathrm{total,slot,3}} = \lfloor 4 \cdot 20 \cdot 1/(4+1) \rfloor = 16$ |

## FIG. 3A

SCS = 30 kHz     SCS = 120 kHz

CC #0   CC #1   CC #2   CC #3   CC #4

EP 3 911 055 B1

## FIG. 3B

| $N_{cells}^{cap}$ | SCS = 30 kHz | SCS = 120 kHz |
|---|---|---|
| 5 | $M_{\mathrm{PDCCH}}^{\mathrm{total,slot,1}} = \left\lfloor 5 \cdot 36 \cdot 2/(2+3) \right\rfloor = 72$ | $M_{\mathrm{PDCCH}}^{\mathrm{total,slot,3}} = \left\lfloor 5 \cdot 20 \cdot 3/(2+3) \right\rfloor = 60$ |
| 4 | $M_{\mathrm{PDCCH}}^{\mathrm{total,slot,1}} = \left\lfloor 4 \cdot 36 \cdot 2/(2+3) \right\rfloor = 57$ | $M_{\mathrm{PDCCH}}^{\mathrm{total,slot,3}} = \left\lfloor 4 \cdot 20 \cdot 3/(2+3) \right\rfloor = 48$ |

FIG. 4

FIG. 5

EP 3 911 055 B1

FIG. 6

EP 3 911 055 B1

10, 20

| 1001 | 1007 | 1004 |
|---|---|---|
| PROCESSOR | | COMMUNICATION APPARATUS |
| 1002 | | 1005 |
| MEMORY | | INPUT APPARATUS |
| 1003 | | 1006 |
| STORAGE | | OUTPUT APPARATUS |

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010

- 3rd Generation Partnership Project; Technical Specification Group Radio Access Network; NR; Physical layer procedures for control (Release 15). *3GPP STANDARD; TECHNICAL SPECIFICATION; 3GPP TS 38.213, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, V15.3.0,* 01 October 2018